# EUROPÄISCHE PATENTANMELDUNG

(11) **EP 0 559 949 A2**
(43) Veröffentlichungstag der Anmeldung: **15.09.1993**
(21) Anmeldenummer: 92110903.9
(22) Anmeldetag: 27.06.1992
(51) Int. Cl.: H04B 7/26, H04Q 7/04

(54) **Verfahren zur Ermittlung der optimalen Standorte und Leistungen von Sendern für picozellulare Funknetze**

(30) Priorität: 07.03.1992 DE 4207290
(71) Anmelder: Bundesrepublik Deutschland, vertr. durch Vorstand der D. Bundespost TELEKOM, vertr. durch Präs. des Fernmeldetechn. Z.amtes, D-64276 Darmstadt (DE)
(72) Erfinder: Althoff, Jürgen, W-4270 Dorsten 1 (DE); Lakomy, Rolf, W-4400 Münster (DE)

(57) **Zusammenfassung**

Zur Ermittlung der optimalen Standorte und Leistungen von Sendern für picozellulare Funknetze stützt sich das Verfahren auf eine digitale Geländedatenbank, die die zur Berechnung erforderlichen Landnutzungswerte enthält. Die Versorgungsbereiche der Sender werden auf Graphikbildschirmen mit digitalisierten topographischen Karten unterlegt. Die Überlagerung der einzelnen Versorgungsflächen und die Umrechnung der Feldstärkevorhersage bei Variation der funkspezifischen Parameter von Sendestationen sowie deren Interferenzverhalten werden interaktiv analysiert. Die aus der Interferenzanalyse gewonnenen Daten bilden zusammen mit den aus der Verkehrsdatenbank auf Versorgungsflächen bezogenen Bedarfswerten die Eingabeparameter für die Kanalzuweisung.

## Beschreibung

Das erfindungsgemäße Verfahren dient der effizienten Gestaltung von picozellularen Netzen, insbesondere in Bezug auf die Ermittlung der optimalen Standorte und der Leistungen von Sendern für Mobilfunknetze.

Die zunehmende Senderdichte im VHF- und UHF-Bereich erfordert neue, effektivere Methoden im Spektrum Management. Die bereits heute bestehenden Sendernetze zeigen - insbesondere bei Erweiterungsplanungen -, daß es unabdingbar ist, Topographie und Morphographie in die Planung von Sendernetzen einzubringen.

Entsprechende Wellenausbreitungsmodelle, in Verbindung mit weiterentwickelten Kanalzuweisungssalgorithmen, führen so zu einer Steigerung der Planungseffizienz.

Die vorhandenen Wellenausbreitungsmodelle sind zum größten Teil für einen begrenzten Bereich bezüglich Frequenz, Topographie und Morphographie gültig. Diese starke Frequenz- und Geländeabhängigkeit resultiert zum einen aus der abstrakten Modellierung der Geländeeigenschaften durch beugende, ideal leitende Halbebenen ("knife edges"), zum anderen bewirkt die Einführung von empirischen Korrekturfaktoren, die dazu dienen, um bei bestimmter Frequenz im betrachteten Gelände Vorhersagewerte und zur Verfügung stehende Meßwerte einander anzugleichen, eine Einschränkung des Gültigkeitsbereiches. In schwierigem Terrain, das heißt topographisch und morphographisch stark gegliedertem Gelände, können solche Methoden zu Problemen bei der Versorgungsprognose führen.

Neuere, breitbandig ausgelegte, vollparametrisierte Ausbreitungsmodelle im VHF- und UHF-Bereich arbeiten unter Verzicht auf Verwendung empirischer Korrekturfaktoren. Die Modellierung basiert hier z. B. auf der geometrischen Beugungstheorie und dem Verfahren zur Berechnung der Streuung an dielektrischen, rauhen Oberflächen. Neben der Landnutzung (Morphographie) wird hier auch die Geländevariation senkrecht zur direkten Verbindungslinie von Sender zu Empfänger berücksichtigt. Bei der Feldstärkevorhersage können neben den Strahlen auf dem direkten Pfad, d. h. dem direkten Strahl bei Sichtverbindung, dem reflektierten Strahl, den mehrfach durch Hindernisse gebeugten Strahlen und den mehrfach gebeugten und reflektierten Strahlen zusätzlich in komplexeren Modellvarianten auch die Streuanteile aller Flächenelemente berückssichtigt werden (Mehrwegeausbreitung).

Die technische Aufgabe, die gelöst werden soll, besteht darin, ein Verfahren zur Ermittlung der optimalen Standorte und Leistungen von Sendern für Mobilfunknetze zu entwickeln, das eine rechnergestützte Planung zellularer Mobilfunknetze ermöglicht, wobei die Überlagerung der einzelnen Versorgungsflächen, die Umrechnung der Feldstärkevorhersagen bei Variation der funkspezifischen Parameter der Senderstationen, sowie deren Interferenzverhalten interaktiv so analysierbar sein sollen, das aus ihnen zusammen mit auf die Versorgungsflächen bezogenen Bedarfswerten Eingabeparameter für die Kanalzuweisung ableitbar sind. Das zu entwickelnde Verfahren soll universell einsetzbar, das heißt, es soll auch für private Interessenten nutzbar sein, die keinen Zugriff auf die bei der Deutschen Bundespost Telekom derzeit zur Ermittlung der Versorgungsbereiche von Mobilfunk-Basisstationen herangezogene Höhen- und Geländedatenbank haben.

Die erfindungsgemäße Aufgabe wird durch ein Verfahren gelöst, bei dem in einem ersten Verfahrensschritt aus Landkarten oder deren Druckvorlagen mittels eines Scanners digitale Rasterdaten von Bebauungsstrukturen gewonnen und in einer Datenbank gespeichert werden.

Aus den als digitale Rasterdaten vorliegenden Bebauungsstrukturen wird in einem zweiten Verfahrensschritt für die Umgebung eines beliebigen Ortes eine Klassifizierung des Bebauungstyps mittels rechentechnischer Mittel abgeleitet. In einem dritten Verfahrensschritt werden die Daten der Entfernung zu einem Sender, dessen kennzeichnende Merkmale bekannt sind, die Daten der Bebauungsstrukturen für die Umgebung und der daraus abgeleitete Bebauungstyp mit einem Rechenprogramm verknüpft, bei dem zu den Pfadverlusten durch Freiraumausbreitung Dämpfungswerte hinzugefügt werden, die in Abhängigkeit des Bebauungstyps in der Umgebung des Empfängers und der Bebauungstypen auf dem Ausbreitungspfad bestimmt werden. Hieraus werden Vorhersagewerte von Ortsfeldstärken lagerichtig bezüglich der verarbeitenden Ausgangsdaten ermittelt und gespeichert.

In einem vierten Verfahrensschritt werden die ermittelten Ortsfeldstärken bezogen auf Feldstärkewerte anderer Sender, die prognostiziert oder gemessen wurden, an denselben Orten so miteinander verglichen, daß durch Unterschreiten eines voreinstellbaren Wertes eine Interferenz ermittelt wird. Das geschieht für alle Orte der betrachteten Fläche und bezüglich aller Sender so, daß die Struktur des Interferenzmusters eines Sendernetzes vollständig erfaßt wird.

In einem fünften Verfahrensschritt werden die erfaßten Interferenzmuster und die Frequenzbedarfe der Sender miteinander verknüpft. Dabei wird für jede dem Sendernetz zur Verfügung stehende Frequenz ermittelt, ob sie bereits einem Sender zugeteilt ist.

Falls die geprüfte Frequenz noch keinem Sender zugeteilt ist, erfolgt ihre Zuordnung zu einem Sender, dessen Frequenzbedarf noch nicht gedeckt ist. Dabei werden Combinierkriterien und Frequenzeinsatzausschlüsse berücksichtigt.

In einem sechsten Arbeitsschritt werden anschließend alle erzielten Ergebnisse datenmäßig so aufbereitet, daß gültige Randbedingungen bei Änderung der Netzstruktur oder bei Änderung der Frequenzbedarfe abgeleitet werden können. Das erfindungsgemäße Verfahren wird anhand eines Ausführungsbeispiels näher erläutert.

Im ersten Verfahrensschritt werden aus Landkarten oder deren Druckvorlagen Bebauungsstrukturen durch Scannen und mustererkennende Nachverarbeitung gewonnen und in einer Datenbank gespeichert. Hierbei wird der analog vorliegende Informationsgehalt des eingesetzten topographischen Kartenmaterials mittels des Scanners in digitale Rasterdaten umgewandelt, die von dem eingesetzten Rechnerprogramm verarbeitet werden. Dabei findet eine Analog/Digital-Wandlung des Kartenmaterials statt. Die Speicherung der durch das Scannen des topographischen Kartenmaterials gewonnenen Rasterdaten erfolgt immer zeilenweise. Hierbei wird eine konstante Rekordlänge von n Rasterelementen pro Zeile benutzt. Eine Lauflängen-Kodierung der Rasterdaten wird nicht vorgenommen.

Anhand der Kenntnis der Farbkodierung des topographischen Kartenmaterials und der Kenntnis der flächenmäßigen Verteilung des eine bestimmte Landnutzungsklasse repräsentierenden Kartenmusters wird aus den Rasterdaten die Klassifizierung des Bebauungstyps für die Umgebung eines beliebigen Ortes abgeleitet. Für die rechnergestützte Weiterverarbeitung müssen folgende Parameter anhand des bearbeitenden topographischen Kartenmaterials ermittelt werden:
- Der Maßstab der Kartengrundlage;
- die Zuordnung der Farbebenen der Karte zu den topographischen Gegebenheiten in der Natur;
- die geodätische Lage des unteren linken Punktes des gescannten Kartenausschnittes als Hoch- und Rechtswert im Gauß-Krüger-System;
- die Auflösung des Scanners in dpi oder dpc;
- die tatsächliche Auflösung des digitalen Kartenblatts in Meter;
- die Anzahl der Pixel pro Zeile der Datei bei dem digitalen Kartenausschnitt und
- die Anzahl der Zeilen der Datei mit dem digitalen Kartenausschnitt.

Für die Feldstärkeberechnung werden neben diesen Daten die funktechnischen Parameter der Basisstationen benötigt. Diese sind:
- Die Koordinaten der Basisstation in Grad, Minuten, Sekunden;
- die Höhe der Sendeantenne über Grund in Meter;
- die effektive Sendeleistung (E.R.P) der Antenne in Watt.

Diese Parameter werden in eine Basisstationsdatei eingetragen. Die Basisstationen sollten anhand einer Nummer oder anhand eines Namens eindeutig indentifiziert werden können.

Die Feldstärkeberechnung wird innerhalb eines von karthesischen Koordinaten begrenzten Fensters mit einer den Planungsbedürfnissen entsprechenden Ausdehnung durchgeführt.

Der Flächenelementindex innerhalb dieses Fensters nimmt von West nach Ost zu, die Zeilennummer des Fensters nimmt von Süd nach Nord zu. Der Ausgangspunkt für die Feldstärkeberechnung ist das südwestliche Flächenelement des rechtwinkligen Koordiantenfesters. Die Basisstation bildet immer das Zentrum des Festers.

Die Feldstärkeberechnung wird für einzelne Flächenelemente innerhalb des Koordinatenfensters zeilenweise durchgeführt. Die Berechnung bezieht sich immer auf das Zentrum eines Flächenelements (Testpunkt). Die Rasterweite, in der die Berechnung erfolgt, kann grundsätzlich nach Bedarf frei bestimmt werden. Bei geeignetem Kartenmaßstab (z. B. 1 : 20000) könnte die Rasterweite genau der Schrittweite entsprechen, in der die Rasterdaten der topographischen Karte vorliegen (wenn diese eine Auflösung von z. B. 20 m aufweist).

Aufgrund der geringen Radien einzelner Funkversorgungszellen in picozellularen Funknetzen kann bei der Berechnung der Versorgungsbereiche in diesen Netzen auf den Einsatz einer für den hier betrachteten Berechnungsmaßstab erforderlichen Höhendatenbank verzichtet werden.

Ein Einsatz der bei der DB Telekom verfügbaren Höhendatenbank kommt wegen der geringen Auflösung dieser Datenbank (die Auflösung liegt im Bereich von rund 150 m) für die Planung von Kleinstzellennetzen nicht in Betracht. Die Erstellung einer Höhendatenbank mit einer Auflösung im 10 m-Bereich ist zudem (finanziell) kaum realaisierbar.

Effekte aufgrund von Beugung elektromagnetischer Strahlung an Kanten sind in dem für picozellulare Funknetze relevanten Frequenzbereich zwischen 900 und 1800 MHz ohnehin vollkommen vernachlässigbar.

Vor der Feldstärkeberechnung werden die in den vorgegebenen Koordinatenfenster liegenden Rasterdaten (mit dem Speicherformat 1 BYTE) aus der Katendatei in den Arbeitsspeicher des Rechners eingeladen. Die zu einem Testpunkt gehörende Landnutzungsklasse wird mit Hilfe eines Filters (Algorithmus) aus einer Umgebunsmatrix desjenigen Testpunkts abgeleitet, für den der Feldstärkewert ermittelt werden soll.

Zur Feldstärkeberechnung werden Algorithmen entsprechend der spezifischen Landnutzungs- bzw. Bebauungsklasse in der Umgebung der Funkfeststation eingesetzt, in denen die Dämpfung relativ zur Freiraumausbreitung als Funktion von der Entfernung, von dem Frequenzbereich und von der Landnutzungsklasse bestimmt wird.

Grundsätzlich gilt, daß alle in der topographischen Karte farblich unterscheidbaren Landnutzungsklassen bei der Berechnung berücksichtigt werden können, solange geeignete Algorithmen zur Berechnung der Dämpfungseigenschaften für diese Landnutzungsklassen zur Verfügung stehen. Nach der Feldstärkeberechnung werden die Feldstärkewerte im Speicherformat 1 BYTE in einer Ergebnisdatei als zweidimensionales Feld abgespeichert.

Für die rechnerische Planung picozellularer Funknetze wird ein graphisches Werkzeug eingesetzt, das für den universellen Einsatz auf einem Personal-Computer entwickelt wurde. Das graphische Werkzeug dient der interaktiven Nachverarbeitung der nach dem o. g. Verfahren berechneten Feldstärkeverteilungen in einem vom Planer bestimmten Koordinatenfenster.

Die Applikation beinhaltet die transparente und lagerichtige Darstellung von Feldstärkeverteilungen oberhalb einer frei wählbaren Mindestempfangsfeldstärke vor dem Hintergrund einer nach dem Gauß-Krüger-System orientierten topographischen Karte, deren Maßstab der Applikation angepaßt werden kann.

Es kann die Feldstärkeverteilung einer oder mehrerer Basisstationen bearbeitet werden. Der Ort der Basisstation wird mit Hilfe eines Rechtecks markiert und ist zudem anhand einer der Basisstation zugewiesenen Nummer oder eines Namens identifizierbar. Die jeweils darzustellende Station wird aus einem Fenster, das eine Liste der verfügbaren Basisstationen enthält, ausgewählt.

Als günstiger Darstellungsmaßstab hat sich Kartenmaterial im Maßstab von 1 : 20000 bis 1 : 100000 bei einer Auflösung von 10 bis 100 m bewährt.

Die in der Datei mit den Basisstationsparametern voreingestellte Mindestempfangsfeldstärke kann bezogen auf die Feldstärkeverteilung der jeweils letzten dargestellten Basisstation interaktiv über einen Schieberegler verändert werden. Einzelne Stationen können nach ihrer Darstellung auf dem Graphikbildschirm gelöscht werden.

In jeder Phase stellt das Graphikwerkzeug die Möglichkeit eines Zooms eines beliebigen bestimmten Ausschnitts des momentanen Bildschirminhaltes zur Verfügung. Der momentane Bildschirminhalt kann in jeder Phase der Planung als Datei gespeichert werden. Dies bietet folgende Möglichkeiten:
- Das gespeicherte Bild kann später weiter bearbeitet werden;
- das gespeicherte Bild kann zur Dokumentation mit Hilfe eines Standard-Graphik-Werkzeugs auf einem Farbplotter oder -drucker ausgegeben werden.
- Dafür wurde ein Programm entwickelt, das aus der gespeicherten Bildinformation ein Standard-TIFF II-Format erzeugt.

Der Interferenzbereich (rot) zwischen einem Versorgungssender (grün) und einem Störsender (gelb) kann bei frei wählbarer Mindestempfangsfeldstärke des Versorgungssenders und bei vom Systemverhalten des zu planenden Funknetzes vorgegebenen Interferenzstörabstand vor einem kartographischen Hintergrund dargestellt werden.

Die graphische Interferenzanalyse zwischen zwei Basisstationen bildet das wichtigste Instrumentarium, um über die weiter unten beschriebene Methode der Kanalzuweisung eine möglichst effektive Ausnutzung des zur Verfügung stehenden Frequenzspektrums zu erreichen.

Die Feldstärkewerte werden je Station einem zweidimensionalen Feld in der logarithmischen Maßeinheit Dezibel Mikrovolt/Meter zugeordnet. Dabei repräsentiert jedes Element dieses Feldes einen Feldstärkewert, wobei die Indizes der Elemente geographischen (Gauß-Krüger-System) vier Koordinatenpaaren zugeordnet sind, die ein Flächenelement bestimmbarer Größe bilden.

Soweit durch das Systemverhalten (handover) der Versorgungsbereich einer Station in Bereichen, in denen die Mindestversorgungsfeldstärke für die Endgeräte überschritten ist, weiter eingeschränkt wird, werden die hierfür maßgebenden Kriterien verwendet, um der für die weiteren Bearbeitungsschritte benötigten Versorgungsdarstellung die sich ergebenden Einschränkungen aufzuprägen.

Interferenzerkennung im Versorgungsbereich einer Station geschieht dadurch, daß suczessive die lagegleichen Elemente der beschreibenden Felder anderer Stationen mit den entsprechenden Elementen im Versorgungsbereich paarweise verglichen werden. Eine Differenz des Sendepegels der versorgenden Station und der verglichenen, die kleiner ist als der systemzulässige Störabstand, bedingt eine Interferenz am Ort der jeweiligen Flächenelemente.

Zur Interpretation und um zu entscheiden, ob eine zu berücksichtigende Interferenzbeziehung besteht, werden die beschreibenden Felder mit folgenden Maßgaben einer Landkartendarstellung grafisch überlagert:
- Flächenelemente, die der Versorgungstation zugeordnet sind und bezüglich derer ein voreingestellter Mindestfeldstärkewert überschritten und durch das Systemverhalten der Versorgungsbereich weiter eingeschränkt wird: grün,
- Flächenelemente, die der interferierenden Station zugeordnet sind und bezüglich derer der um den Interferenzabstand verminderte Mindestfeldstärkewert der versorgenden Station überschritten wird: gelb,
- Flächenelemente, die der versorgenden Station zugeordnet sind und bezüglich derer der Störabstand unterschritten wird: rot.

Bei der Interpretation der o. a. Darstellungen wird für jede mögliche Störbeziehung festgestellt, ob aufgrund der Rotfärbung von Teilen eines Versorgungsbereiches ein Gleichkanaleinsatz bei dem betrachteten Stationspaar ausgeschlossen werden muß. In diesen Fällen werden in einer Liste der Stationen (BSFREQDATA) zu jeder Station, für die die o. a. Feststellung positiv getroffen wurde, die interferierenden Stationen hinzugefügt und bei diesen dort, wo sie als Versorgungsstationen eingetragen sind, wird die gerade betrachtete Versorgungsstation als interferierende Station eingetragen und zwar unabhängig davon, ob sie tatsächlich Interferenzstörer ist.

Auf diese Weise wird das gesamte Interferenzmuster des Netzes symmetriert und dokumentiert.

Damit liegen alle Daten vor, die die Struktur des Netzes beschreiben.

Um den letzten Schritt des 1. Planungszyklus tun zu können, müssen aus einer weiteren Liste (BSTRAFDATA), in der zu jeder Station der Bedarf an Funkkanälen eingetragen ist, die Bedarfszahlen entnommen werden.

Aus einer weiteren Liste mit den für das Netz zur Verfügung stehenden Kanälen (FREQDATA) werden diese entnommen.

Das Interferenzmuster wurde, wie beschrieben, in die Liste BSFREQDATA übernommen.

Abschließend werden die technologieabhängigen Parameter (Combinerabstände) und die regional abhängigen Parameter (Kanalsperren aus Koordinierungsgründen) in eine Liste mit Voreinstellungen übernommen.

Alternativ hierzu können Combinierabstände durch eine combiniergerechte Reihung der Kanäle in der Liste FREQDATA eingehalten werden und die Kanalsperren können durch Vorabeinträge in die Liste BSFREQDATA gesetzt werden.

Im folgenden wird die Kanalzuweisung im einzelnen beschrieben. Entsprechend der Reihung der Stationen in der Liste BSFREQDATA wird geprüft, ob der 1. Kanal aus der Liste FREQDATA bei den Stationen bereits eingesetzt ist oder bei einer der Stationen bereits eingesetzt ist, die zu dieser Station in der Liste BSFREQDATA als interferierende Stationen eingetragen sind. Im Fall des positiven Prüfungsergebnisses wird die gleiche Prüfung für den nächsten in der Liste FREQDATA eingetragenen Kanal durchgeführt.

Im Fall des negativen Prüfungsergebnisses wird der gerade abgeprüfte Kanal der Liste FREQDATA zu der Station in die Liste BSFREQDATA eingetragen.

Prüfungen und Einträge werden fortgesetzt, bis bei der Station so viele Kanäle eingetragen wurden, wie es dem Bedarfseintrag in der Liste BSTRAFDATA entspricht oder bis die Prüfung für alle in der Liste FREQDATA eingetragenen Kanäle abgeschlossen ist.

Anschließend wird der gleiche Zyklus für die nächste Station der BSFREQDATA durchlaufen, bis alle Stationen abgearbeitet sind.

Die beschriebenen Listeneingänge bewirken, daß ein zweiter Zyklus (z. B. eine Erweiterung) durch ergänzen der Listeneinträge in den Listen
- BSDATA: beim Ändern, Hinzufügen oder Entfernen von Stationen;
- BSFREQDATA: beim Hinzufügen oder Entfernen von Stationen, Kanälen oder Interferenzbeziehungen einzelner Stationen;
- FREQDATA: bei Veränderungen des zur Verfügung stehenden Frequenzspektrums;
- BSTRAFDATA: bei Veränderungen des Kanalbedarfs einzelner Stationen
- vorbereitet: werden kann.

Ein zweites, sinngemäßes Durchlaufen der beschriebenen Schritte führt zu dem entsprechend angepaßten Ergebnis. Zum Verknüpfen und Verändern der Listeneinträge wird, soweit dies von Hand geschieht, mit einer relationalen Datenbank gearbeitet, die Ergebnislisten auf Datenträger oder Papier zur Verfügung stellt. Zum Verknüpfen oder Verändern der Listeneinträge wird, soweit dies durch Programme geschieht, mit Ausgabelisten gearbeitet, die durch Konvertierungsprogramme wieder in die relationale Datenbank übernommen werden.

## Patentansprüche

1. Verfahren zur Ermittlung der optimalen Standorte und Leistungen von Sendern für picozellulare Funknetze, dadurch gekennzeichnet, daß aus Landkarten oder deren Druckvorlagen mittels eines Scanners digitale Rasterdaten von Bebauungsstrukturen gewonnen und in einer Datenbank gespeichert werden,
daß aus den als digitale Rasterdaten vorliegenden Bebauungsstrukturen für die Umgebung eines beliebigen Ortes eine Klassifizierung des Bebauungstyps rechentechnisch abgeleitet wird,
daß durch Verknüpfung der Daten der Entfernung zu einem Sender, dessen kennzeichnende Merkmale bekannt sind, den Bebauungsstrukturen für die Umgebung und dem daraus abgeleiteten Bebauungstyp mit einem Rechenprogramm, bei dem zu den Pfadverlusten durch Freiraumausbreitung Dämpfungswerte hinzugefügt werden, die in Abhängigkeit des Bebauungstyps in der Umgebung des Empfängers und der Bebauungstypen auf dem Ausbreitungspfad bestimmt werden, Vorhersagewerte von Ortsfeldstärken lagerichtig bezüglich der verarbeiteten Ausgangsdaten ermittelt und gespeichert werden,
daß die ermittelten Ortsfeldstärken, bezogen auf Feldstärkewerte anderer Sender, die prognostiziert oder gemessen wurden, an denselben Orten so miteinander verglichen werden, daß durch Unterschreiten eines voreinstellbaren Wertes eine Interferenz ermittelt wird, wobei dies für alle Orte der betrachteten Fläche und bezüglich aller Sender so geschieht, daß die Struktur des Interferenzmusters eines Sendernetzes vollständig erfaßt ist, daß die erfaßten Interferenzmuster und die Frequenzbedarf der einzelnen Sender miteinander verknüpft werden, wobei für jede dem Sendernetz zur Verfügung stehende Frequenz rechentechnisch ermittelt wird, ob sie bereits einem Sender zugeteilt ist, wobei unter Berücksichtigung von Combinerkriterien und Frequenzeinsatzausschüssen für eine geprüfte Frequenz, die noch frei ist, eine Zuordnung zu einem Sender erfolgt, dessen Frequenzbedarf noch nicht gedeckt ist, und
daß alle erzielten Ergebnisse datenmäßig so aufbereitet werden, daß gültige Randbedingungen bei Änderung der Netzstruktur oder der Frequenzbedarfe ableitbar sind.
